# EUROPÄISCHE PATENTANMELDUNG

(11) **EP 2 826 922 A1**
(43) Veröffentlichungstag der Anmeldung: **21.01.2015**
(21) Anmeldenummer: 14002383.9
(22) Anmeldetag: 11.07.2014
(51) Int. Cl.: E03C 1/04

(54) **Radiallager-Ringelement und Sanitärarmatur mit einem solchen**

(30) Priorität: 15.07.2013 DE 102013011708
(71) Anmelder: HANSA METALLWERKE AG, 70567 Stuttgart (DE)
(72) Erfinder: Schrader, Jens, 70619 Stuttgart (DE)
(74) Vertreter: Heinrich, Hanjo

(57) **Zusammenfassung**

Es ist ein Radiallager-Ringelement zum beweglichen Lagern eines ersten Bauteils (16) und eines zweiten Bauteils (12) angegeben, welche koaxial zueinander angeordnet sind. Das Radiallager-Ringelement hat eine Außenmantelfläche (40) und eine Innenmantelfläche (44). An der Außenmantelfläche (40) sind äußere Materialerhebungen (42) und an der Innenmantelfläche (44) sind innere Materialerhebungen (46) vorhanden. Die äußeren Materialerhebungen (42) und/oder die inneren Materialerhebungen (46) sind versetzt zueinander angeordnet und somit gegenläufig in radialer Richtung beweglich.
Außerdem ist eine Sanitärarmatur angegeben, bei der ein Auslauf (16), welcher relativ zu einem Lagerbauteil (12) der Sanitärarmatur bewegbar ist, ein Verbindungsteil (20) umfasst, welches koaxial mit einem Lagerbereich (22) des Lagerbauteils (12) zusammenarbeitet. Die Armatur weist wenigstens ein solches Radiallager-Ringelement (36) auf, welches zwischen dem Verbindungsteil (20) des Auslaufes (16) und dem Lagerbereich (22) des Lagerbauteils (12) angeordnet ist.

## Beschreibung

Die Erfindung betrifft ein Radiallager-Ringelement zum beweglichen Lagern eines ersten Bauteils und eines zweiten Bauteils, welche koaxial zueinander angeordnet sind, wobei
a) das Radiallager-Ringelement eine Außenmantelfläche und eine Innenmantelfläche hat;
b) an der Außenmantelfläche äußere Materialerhebungen und an der Innenmantelfläche innere Materialerhebungen (46) vorhanden sind.

Außerdem betrifft die Erfindung eine Sanitärarmatur mit
a) einem Auslauf, welcher relativ zu einem Lagerbauteil der Sanitärarmatur bewegbar ist und ein Verbindungsteil umfasst, welches koaxial mit einem Lagerbereich des Lagerbauteils zusammenarbeitet;
b) wenigstens einem Radiallager-Ringelement mit einer Außenmantelfläche und einer Innenmantelfläche, welches zwischen dem Verbindungsteil des Auslaufes und dem Lagerbereich des Lagerbauteils angeordnet ist.

Grundsätzlich stellen fertigungstechnisch begründete Toleranzen bei Schwenk- oder Schiebebauteilen ein beträchtliches Problem dar, bei denen ein erstes Bauteil koaxial mit einem zweiten Bauteil zusammenarbeitet und bei denen die Bauteile relativ zueinander bewegt werden können. Durch die Toleranzen kann abhängig von der Relativlage der Bauteile zueinander ein mehr oder weniger großes radiales Spiel zwischen den Bauteilen auftreten.

Wenn bereits bei der Fertigung der Bauteile auf eine ausreichende Genauigkeit geachtet werden soll, ist dies in der Regel mit hohem Aufwand und mit entsprechend hohen Fertigungskosten verbunden. Kostengünstiger ist der Ansatz, zusätzliche Bauelemente in Form von Radiallager-Ringelementen der eingangs genannten Art vorzusehen, welche ein vorhandenes Spiel kompensieren. Wie aus den Erläuterungen weiter unten klar wird, bedeutet Ringelement insbesondere, dass das Element einen ringförmigen Querschnitt hat. Es ist nicht auf die Form eines Ringes beschränkt, sondern kann auch beispielsweise eine Hülse sein, die im Vergleich zu einem Ring eine längere axiale Erstreckung hat.

Eine Sanitärarmatur der eingangs genannten Art, welche diesem Ansatz folgt, ist aus der DE 103 37 223 B4 bekannt. Dort ist ein Schwenkauslauf mit einer als Sichthülse ausgebildeten Schwenkhülse auf eine Kartusche aufgesteckt. Die Schwenkhülse legt in diesem Fall somit das erste Bauteil bezogen auf das Radiallager-Ringelement bzw. das Verbindungsteil der Sanitärarmatur fest, wogegen die Kartusche das zweite Bauteil bezogen auf das Radiallager-Ringelement bzw. das Lagerbauteil der Sanitärarmatur definiert. Zwischen der Schwenkhülse und der Kartusche befinden sich als Radiallager-Ringelemente zwei Gleitringe, welche an der Außenmantelfläche und der Innenmantelfläche Materialerhebungen haben, die gegen die Schwenkhülse bzw. die Kartusche anliegen. Hierdurch wird eine weitgehend spielfreie Radiallagerung bei einer leichtgängigen Verschwenkbarkeit des Auslaufs erreicht.

Die Materialerhebungen sind dort auf der Außenmantelfläche und der Innenmantelfläche gegenüberliegend angeordnet und die Materialerhebungen auf beiden Mantelflächen liegen im montierten Zustand an der Schwenkhülse und der Kartusche an. Wenn der Auslauf verschwenkt wird und es durch Toleranzen zu einer Verringerung des Abstandes zwischen der Schwenkhülse und der Kartusche kommt, wird das Material des Gleitringes im Bereich der Materialerhebungen zusammengequetscht und deformiert. Hierdurch kann das Material derart beansprucht und auch abgerieben werden, dass im Laufe der Zeit auf Grund solcher Deformationsschäden erneut ein Spiel zwischen den Bauteilen entsteht.

Es ist daher Aufgabe der vorliegenden Erfindung, ein Radiallager-Ringelement und eine Sanitärarmatur der eingangs genannten Art zu schaffen, bei denen eine spielfreie Radiallagerung zwischen einem ersten Bauteil bzw. dem Verbindungsteil des Auslaufes und einem zweiten Bauteil bzw. dem Lagerbereich des Lagerbauteils gewährleistet und die Gefahr von Deformationsschäden verringert sind.

Diese Aufgabe wird erfindungsgemäß bei dem Radiallager-Ringelement dadurch gelöst, dass
c) die äußeren Materialerhebungen und/oder die inneren Materialerhebungen in radialer Richtung beweglich sind.

Nachfolgend wird die Funktion des Radiallager-Ringelements der Einfachheit halber am Beispiel der eingangs genannten Sanitärarmatur erläutert. Sinngemäß entsprechend gilt das hierzu Gesagte auch für andere Bauteil-Paare, die als zueinander koaxiale Bauteile zusammenarbeiten.

Die Materialerhebungen liegen bei der Sanitärarmatur jeweils an dem Verbindungsteil des Auslaufes bzw. dem Lagerbereich des Lagerbauteils an. Erfindungsgemäß wurde erkannt, dass durch eine radiale Beweglichkeit der Materialerhebungen die Materialbeanspruchung des Radiallager-Ringelements bei der Bewegung zwischen Auslauf und Lagerbauteil verringert werden kann. Wenn es, wie oben beschrieben, beispielsweise beim Verschwenken eines Schwenkauslauf durch Toleranzen zu einer Verringerung des Abstandes zwischen dessen Verbindungsteil und dem Lagerbereichs des Lagerbauteils kommt, kann eine am Ort der Verengung vorhandene Materialerhebung radial ausweichen, ohne dass es zu einer Materialdeformation kommen muss. In jedem Fall ist die Materialdeformation verringert.

Es ist bevorzugt, dass
a) die Außenmantelfläche des Radiallager-Ringelements äußere Materialerhebungen und die Innenmantelfläche des Radiallager-Ringelements innere Materialerhebungen bilden;
b) die äußeren Materialerhebungen und die inneren Materialerhebungen derart zueinander versetzt angeordnet sind und das Radiallager-Ringelement aus einem Material ist, dass die äußeren Materialerhebungen und die inneren Materialerhebungen in radialer Richtung beweglich sind.

In diesem Fall bleibt auf der jeweils von einer Materialerhebung abliegenden Seite des Radiallager-Ringelements zwischen diesem und dem benachbarten Bauteil der Sanitärarmatur, d.h. dem Verbindungsteil des Auslaufes oder dem Lagerbereich des Lagerbauteils, jedoch ein Abstand und dadurch ein Zwischenraum. Eine am Ort einer entstehenden Verengung vorhandene Materialerhebung kann dann radial in diesen Zwischenraum ausweichen, ohne dass es zu einer Materialdeformation kommen muss.

Vorzugsweise sind die äußeren Materialerhebungen und/oder die inneren Materialerhebungen federnd radial beweglich. Auf diese Weise drücken die äußeren Materialerhebungen und die inneren Materialerhebungen stets unter einer Vorspannung gegen das ihnen jeweils benachbarte Bauteil an.

Insbesondere bei einer federnden Lagerung können äußere und innere Materialerhebungen auch gegenüberliegend angeordnet sein, solange die Materialerhebungen sich in radialer Richtung aufeinander zu oder voneinander weg bewegen können. So sind beispielsweise zwei außen liegende, die Materialerhebung definierende Lager- oder Andrückorgane vorstellbar, die in radialer Richtung durch ein Federelement verbunden sind. Bei der oben erläuterten zueinander versetzten Anordnung der Materialerhebungen wird die Federwirkung alternativ zu einer strukturellen Feder vorzugsweise über die Materialeigenschaften des Radiallager-Ringelement erreicht.

Es ist günstig, wenn äußere Materialerhebungen und/oder innere Materialerhebungen Kontaktbereiche haben, die durch Kontaktflächen vorgegeben sind, die der lichten Kontur eine zum Radiallager-Ringelement koaxialen Kreiszylinders folgen, oder die linienhaft sind. Solche Kontaktflächen bieten einen flächigeren Kontakt und unterstützten so die Radiallagerung. Bei linienhaften Kontaktbereichen, die beispielsweise durch gewölbte Materialerhebungen erzeugt werden können, ist die Reibung nochmals verringert, wodurch eine gute Gängigkeit sichergestellt ist.

Wenn äußere Materialerhebungen und/oder innere Materialerhebungen Umfangsrippen bilden, ist das Radiallager-Ringelement insbesondere für Bauteile geeignet, die in axialer Richtung relativ zueinander bewegt werden und dabei dennoch radial sicher gelagert bleiben sollen. Hierauf wird weiter unten nochmals eingegangen.

Eine Unterstützung sowohl einer Schwenk- oder Drehbewegung und einer Axialbewegung zweier Bauteile gegeneinander kann besonders gut erfolgen, wenn äußere Materialerhebungen und/oder innere Materialerhebungen diskrete Noppen bilden.

Es ist günstig, wenn in einer oder in allen Materialerhebungen ein Depot für ein Schmiermittel eingearbeitet ist. So kann ein die Bewegung erleichterndes Schmiermittel bei der Montage vorgelegt werden.

Vorzugsweise ist das Depot als axiale Nut oder als Sackloch ausgebildet.

Allgemein ist es günstig, wenn das Radiallager-Ringelement als Führungsring oder als Führungshülse ausgebildet ist. Eine Führungshülse, die eine größere Axialerstreckung als ein Führungsring hat, wird bevorzugt eingesetzt, wenn es auch zu einer Axialbewegung der Bauteile relativ zueinander kommt.

Die oben angegebene Aufgabe wird bei einer Sanitärarmatur der eingangs genannten Art dadurch gelöst, dass das Radiallager-Ringelement ein Radiallager-Ringelement mit einigen oder allen der oben erläuterten Merkmale ist.

Die hierdurch erreichten Vorteile entsprechen den oben zu den einzelnen Merkmalen erläuterten Vorteilen.

Ausführungsbeispiele der Erfindung werden nachfolgend anhand der Zeichnungen näher erläutert. In diesen zeigen:
- Figur 1: eine Sanitärarmatur mit einem Schwenkauslauf mit einem Verbindungsteil, welches in einen Lagerbereich eines nur angedeuteten Armaturenkörpers eingesteckt ist, wobei eine Radiallagerung durch zwei Führungsringe erfolgt;
- Figur 2: eine Draufsicht auf ein erstes Ausführungsbeispiel eines Radiallager-Ringelements in Form eines Führungsringes;
- Figur 3: eine perspektivische Ansicht des Führungsringes von Figur 2;
- Figur 4: eine perspektivische Ansicht eines zweiten Ausführungsbeispiels eines Radiallager-Ringelements in Form eines abgewandelten Führungsringes;
- Figur 5: eine Draufsicht auf den Führungsring von Figur 4;
- Figur 6: eine perspektivische Ansicht eines dritten Ausführungsbeispiels eines Radiallager-Ringelements in Form eines nochmals abgewandelten Führungsringes;
- Figur 7: eine Draufsicht auf den Führungsring von Figur 6;
- Figur 8: eine perspektivische Ansicht eines vierten Ausführungsbeispiels eines Radiallager-Ringelements in Form eines erneut abgewandelten Führungsringes;
- Figur 9: eine Draufsicht auf den Führungsring von Figur 8;
- Figur 10: einen Schnitt eines fünften Ausführungsbeispiels eines Radiallager-Ringelements in Form einer Führungshülse;
- Figur 11: einen Schnitt eines sechsten Ausführungsbeispiels eines Radiallager-Ringelements in Form einer abgewandelten Führungshülse.

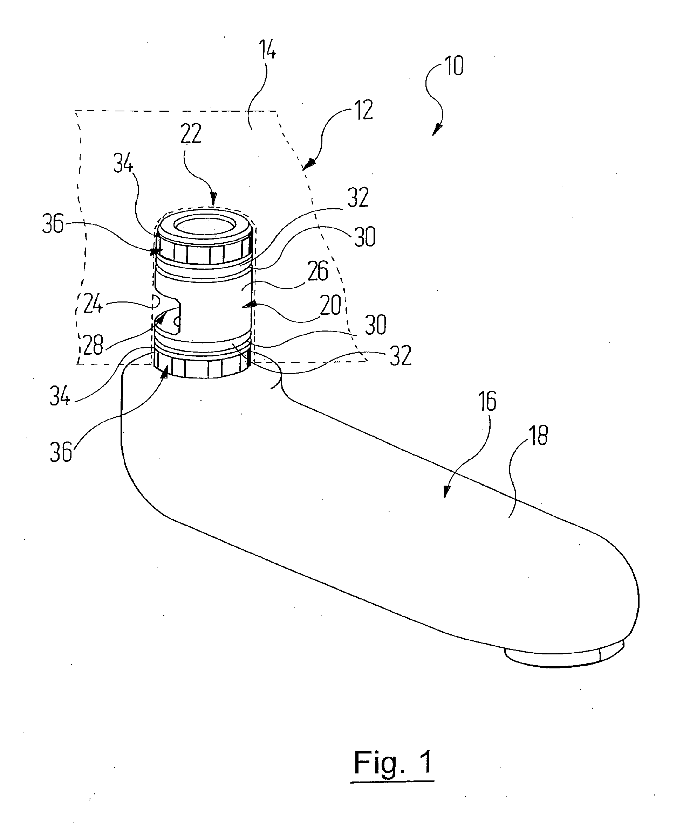

In Figur 1 ist mit 10 insgesamt eine Sanitärarmatur bezeichnet, welche einen Armaturenkörper 12 umfasst, von dem lediglich und nur stark schematisch mit gestrichelten Linien ein Abschnitt 14 angedeutet ist. Die Sanitärarmatur 10 umfasst einen Auslauf 16, welche beim vorliegenden Ausführungsbeispiel ein Schwenkauslauf 18 ist.

Der Auslauf 16 umfasst ein Verbindungsteil 20, welches koaxial mit einem Lagerbereich 22 des Armaturenkörpers 12 zusammenarbeitet. Beim vorliegenden Ausführungsbeispiel ist der Lagerbereich 22 des Armaturenkörpers 12 als Lageraufnahme 24 und das Verbindungsteil 20 des Auslaufes 16 als dazu komplementärer Drehzapfen 26 ausgebildet, welcher in die Lageraufnahme 24 des Armaturenkörpers 12 eingesteckt werden kann. Der Armaturenkörper 12 dient somit als Lagerbauteil für den Auslauf 16.

Der Lagerbereich 22 des Armaturenkörpers 12 kann beispielsweise auch durch eine vom Armaturenkörper 12 umfasste Kartusche vorgegeben sein, welche eine entsprechende Lageraufnahme 24 hat. In diesem Fall bildet folglich diese Kartusche das Lagerbauteil für den Auslauf 16.

Bei einer nicht eigens gezeigten Abwandlung können die Verhältnisse auch umgekehrt sein; beispielsweise kann das Verbindungsteil des Auslaufes 16 eine von außen sichtbare Lagerhülse sein, die koaxial zu einem Lagerzapfen des Armaturenkörpers 12 angeordnet ist und diesen umgibt, wie es oben am Beispiel der DE 103 37 223 B4 erläutert wurde.

Der Drehzapfen 26 des Auslaufs 16 hat einen radialen Sicherungsdurchgang 28, durch welchen der Auslauf 16 mit Hilfe einer nicht eigens gezeigten Sicherungsklemme in an und für sich bekannter Weise gegen eine Axialbewegung gesichert werden kann. Der Drehzapfen 26 ist außerdem zugleich ein Anschlusszapfen, so dass eine Strömungsverbindung zwischen Armaturenkörper 12 und Auslauf 16 hergestellt ist.

Der Drehzapfen 26 weist in seiner äußeren Mantelfläche zwei umlaufende Nuten 30 auf, die jeweils eine O-Ringdichtung 32 aufnehmen.

Der Drehzapfen 26 hat außerdem in seiner äußeren Mantelfläche zwei umlaufende Ausnehmungen 34, die der.Aufnahme von Radiallager-Ringelementen 36 dienen, durch die ein zwischen dem Verbindungsteil 20 des Auslaufes 16 und dem Lagerbereich 22 des Armaturenkörpers 12, d.h. vorliegend zwischen dem Drehzapfen 26 und der Lageraufnahme 24, vorhandenes Spiel kompensiert werden kann.

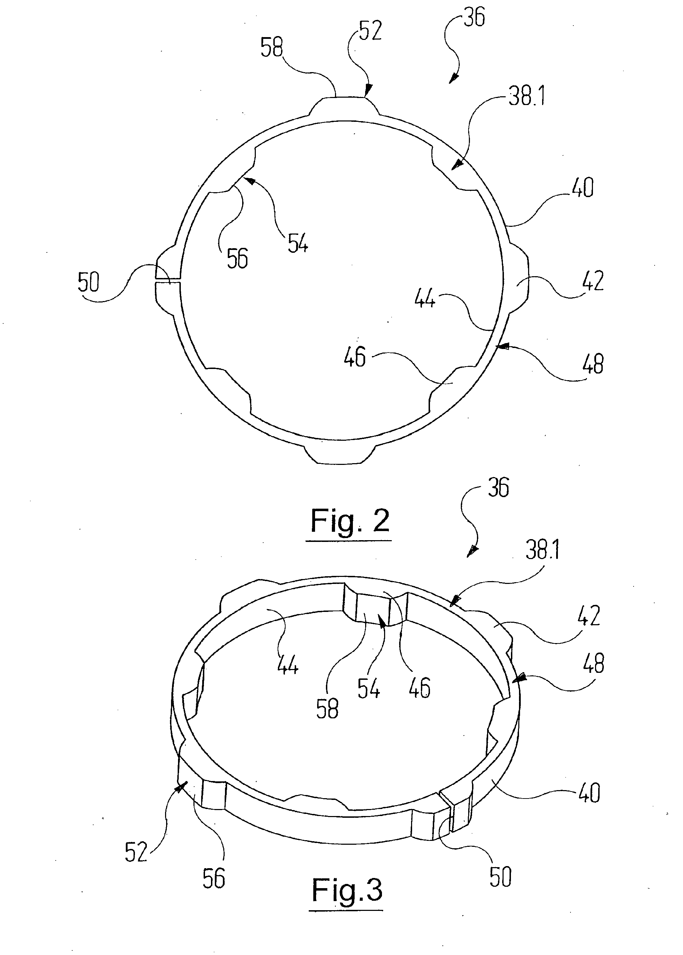

Zunächst wird auf die Figuren 2 und 3 Bezug genommen, welche als erstes Ausführungsbeispiel eines Radiallager-Ringelements 36 einen Führungsring 38.1 zeigen.

Beim Führungsring 38.1 bildet dessen Außenmantelfläche 40 äußere Materialerhebungen 42 und dessen Innenmantelfläche 44 innere Materialerhebungen 46, die zueinander versetzt angeordnet sind. Dies bedeutet, dass in radialer Richtung gegenüber von einer äußeren Materialerhebung 42 keine innere Materialerhebung 46 auf der Innenmantelfläche 44 ausgebildet ist. Entsprechend befindet sich in radialer Richtung gegenüber von einer inneren Materialerhebung 46 keine äußere Materialerhebung 42 auf der Außenmantelfläche 40.

Es ist jeweils nur eine Materialerhebung 42, 46 mit einem Bezugzeichen versehen. Zwischen zwei in Umfangsrichtung benachbarten Materialerhebungen 42 und 46 befinden sich Ringsegmentabschnitte 48 des Führungsringes 38.1. Bezogen auf diese Ringsegmentabschnitte 48 sind die Materialerhebungen 42 und 46 in radialer Richtung erhaben.

Zumindest diese Ringsegmentabschnitte 48 sind aus einem Material, so dass die Materialerhebungen 42 und 46 sich in radialer Richtung bewegen können, wenn auf sie eine radiale Kraft einwirkt. Dieses Material ist somit zumindest entsprechend flexibel. Beim vorliegenden Ausführungsbeispiel haben die Ringsegmentabschnitte 48 eine Federwirkung, so dass die äußeren Materialerhebungen 42 und die inneren Materialerhebungen 46 federnd radial beweglich sind.

In diesem Fall geben die Ringsegmentabschnitte 48 federnd nach, so lange die Kraft einwirkt. Wenn keine Kraft mehr auf eine bestimmte Materialerhebung 42 oder 46 ausgeübt wird, bewegen sich diese wieder in die Ausgangslage zurück.

Beim vorliegenden Führungsring 38.1 und den nachfolgend erläuterten Führungsringen erstrecken sich die Materialerhebungen 42, 46 in axialer Richtung über den gesamten Führungsring. Bei nicht eigens gezeigten Abwandlung können die Materialerhebungen 42, 46 in axialer Richtung jedoch auch kürzer sein als der Führungsring 38 selbst.

Der Führungsring 38.1 weist einen radialen Schlitz 50 auf, so dass er zum Aufbringen auf das Verbindungsteil 20 des Auslaufes 16 etwas aufgeweitet werden kann.

Die Materialerhebungen 42 und 46 weisen jeweils einen radial außen liegende Kontaktbereich 52 bzw. 54 auf, welche hier jeweils flächig und als Kontaktfläche 56 bzw. 58 ausgebildet sind, die der lichten Kontur eines zum Führungsring 38.1 koaxialen Kreiszylinders folgen. Somit liegen die äußeren Materialerhebungen 42 flächig an dem Lagerbereich 22 und die inneren Materialerhebungen 46 flächig am Grund der Ausnehmungen 34 im Drehzapfen 26 an.

Wenn nun bei einer Schwenkbewegung des Auslaufs 16 die Lageraufnahme 24 oder der Drehzapfen 26 auf die Kontaktbereiche 52 oder 54 eine Kraft ausübt, können die zugehörigen Materialerhebungen 42, 46 in die zur Kraft entgegengesetzte Richtung ausweichen. Dadurch ist ein Materialabrieb bei einer weiteren Schwenkbewegung des Auslaufs 16 verringert und gleichzeitig dessen radiale Lagerung sichergestellt.

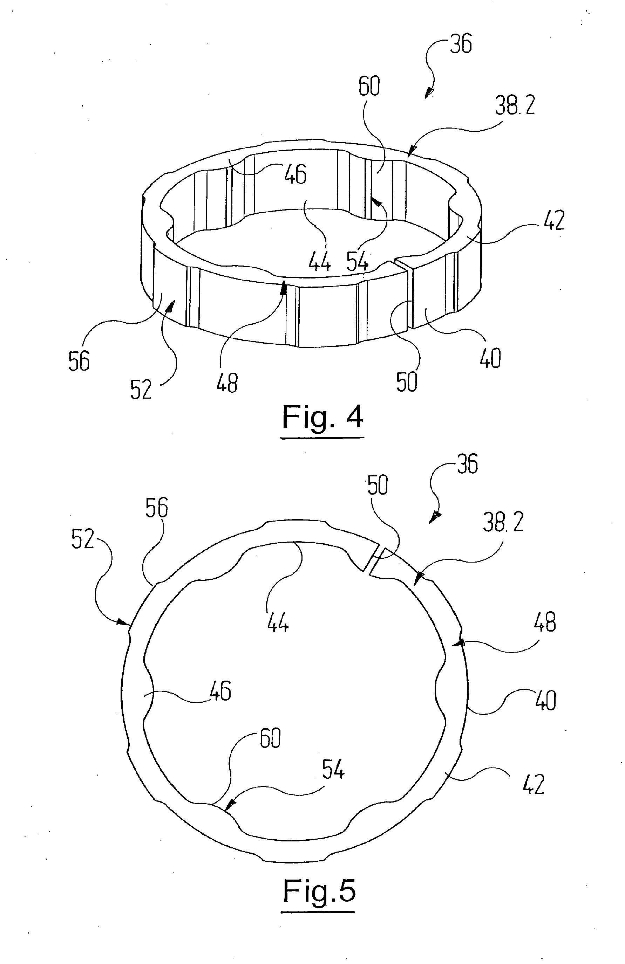

Die Figuren 4 und 5 zeigen als zweites Ausführungsbeispiel eines Radiallager-Ringelements 36 einen Führungsring 38.2, wobei bereits erläuterte Komponenten dieselben Bezugszeichen tragen.

Bei dem Führungsring 38.2 sind die äußeren Materialerhebungen 42 nicht so stark erhaben, wie bei dem Führungsring 38.1. Ihre Kontaktflächen 56 folgen jedoch wieder der lichten Kontur eines entsprechenden koaxialen Kreiszylinders. Insgesamt decken die Kontaktflächen 56 so eine größere Fläche ab, als die Kontaktflächen 56 des Führungsringes 38.1.

Bei den inneren Materialerhebungen 46 ist die Innenmantelfläche 44 des Führungsringes 38.2 nun dagegen als gewölbte Flächen 60 ausgebildet, wodurch der Kontaktbereich 54 zum Drehzapfen 26 des Auslaufs 16 dort linienhaft ist.

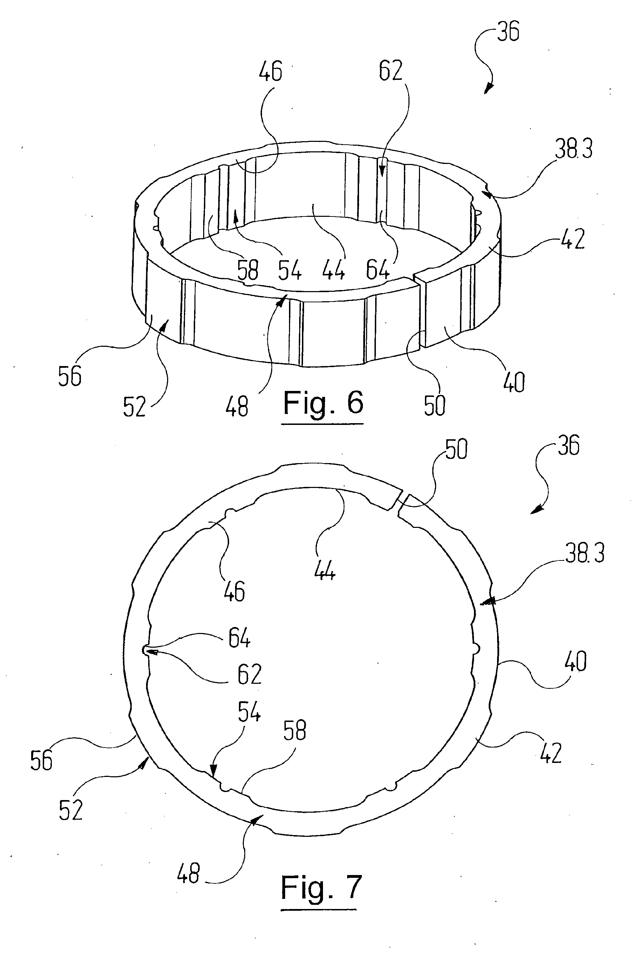

Die Figuren 6 und 7 zeigen als drittes Ausführungsbeispiel eines Radiallager-Ringelements 36 einen Führungsring 38.3, wobei bereits erläuterte Komponenten wieder dieselben Bezugszeichen tragen.

Der Führungsring 38.3 entspricht dem Führungsring 38.2 nach den Figuren 4 und 5, abgesehen von den inneren Materialerhebungen 46, welche beim Führungsring 38.2 wieder mit Kontaktflächen 58 ausgebildet sind, die der lichten Kontur eines koaxialen Kreiszylinders folgen, wie es beim Führungsring 38.1 der Fall ist. Die Flächenabdeckung der Kontaktflächen 58 der inneren Materialerhebungen 46 ist im Vergleich dazu jedoch vergrößert, indem die inneren Materialerhebungen 46 nicht so stark erhaben sind.

Außerdem ist in den inneren Materialerhebungen 46 jeweils ein Depot 62 für ein Schmiermittel, beispielsweise ein Schmierfett, ausgebildet. Das Depot 62 ist als axiale Nut 64 in die Innenmantelfläche 44 eingearbeitet, in welche das Schmiermittel vor der Installation eingebracht werden kann.

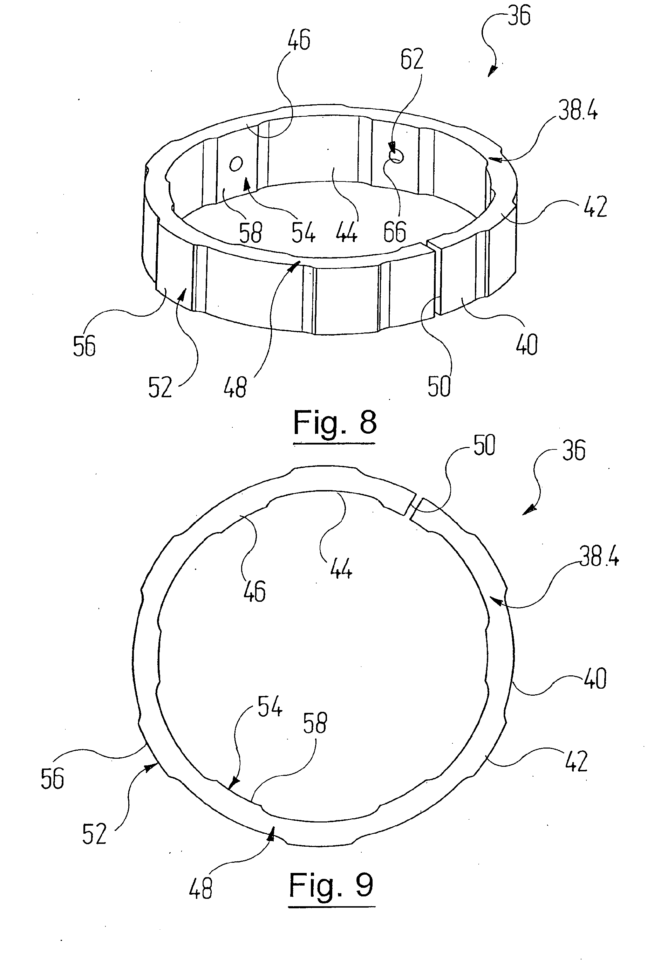

Die Figuren 8 und 9 zeigen als viertes Ausführungsbeispiel eines Radiallager-Ringelements 36 einen Führungsring 38.4, wobei bereits erläuterte Komponenten wieder dieselben Bezugszeichen tragen.

Der Führungsring 38.4 entspricht dem Führungsring 38.3 nach den Figuren 6 und 7, wobei das Depot 62 anders ausgebildet ist. Statt der axialen Nuten 64 sind in die inneren Materialerhebungen 46 mittig Sacklöcher 66 eingearbeitet, in denen Schmiermittel deponiert werden kann.

Allgemein sind die Depots 62 für Schmiermittel als Vertiefung in den inneren Materialerhebungen 46 ausgebildet. Gegebenenfalls können die Depots 62 auch an den äußeren Materialerhebungen 44 vorgesehen sein, was hier nicht eigens gezeigt ist.

Bei der oben erläuterten Sanitärarmatur 10 ist die Bewegung, die zwischen dem Armaturenkörper 12 und allgemein dem Lagerbauteil und dem Auslauf 16 möglich ist, eine Schwenkbewegung. Hierbei werden das Verbindungsteil 20 und die Lageraufnahme 24 in Umfangsrichtung relativ zueinander bewegt.

Es gibt jedoch auch Sanitärarmaturen, bei denen zwei Bauteile in axialer Richtung relativ zueinander bewegt werden. Beispielsweise kann ein Auslauf so ausgestaltet sein, dass er in axialer Richtung verlängert werden kann, indem er axial auf einem Lagerbauteil verschoben wird.

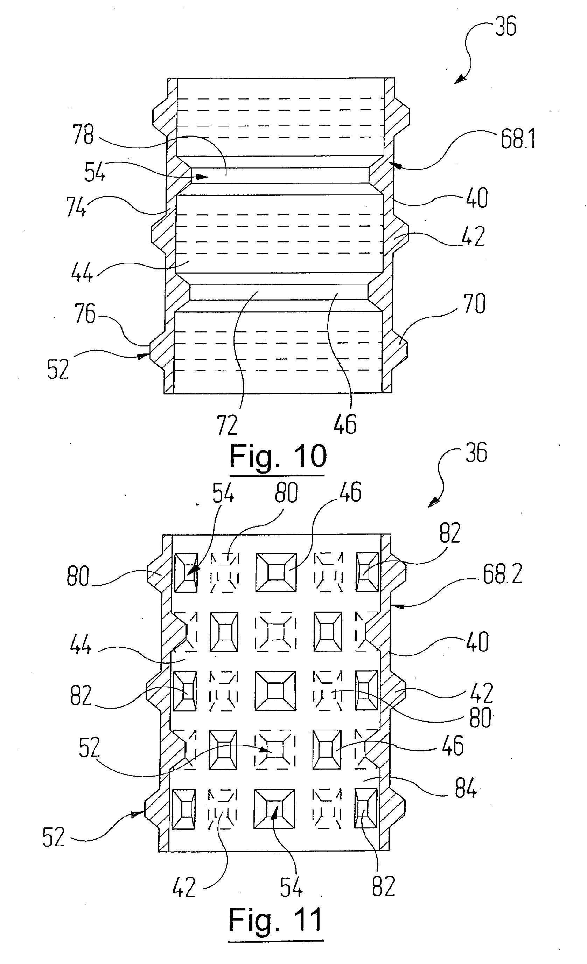

Ein fünftes Ausführungsbeispiel eines Radiallager-Ringelements 36, welches für solche Axialbewegungen konzipiert ist, zeigt Figur 10. Dieses Radiallager-Ringelement 36 ist als zylindrische Führungshülse 68.1 ausgebildet. Komponenten, die funktionell denen der Führungsringe 38.1, 38.2, 38.3 oder 38.4 entsprechen, tragen dort dieselben Bezugszeichen.

Die Außenmantelfläche 40 und die Innenmantelfläche 44 der Führungshülse 68.1 bilden die äußeren und die inneren Materialerhebungen 42 und 46 in Form von in Umfangsrichtung verlaufenden äußeren Umfangsrippen 70 und inneren Umfangsrippen 72 aus, die in axialer Richtung versetzt angeordnet sind. Der Verlauf der äußeren Umfangsrippen 70 hinter der Zeichenebene ist mit gestrichelten Linien angedeutet.

Zwischen zwei in axialer Richtung benachbarten Umfangsrippen 70 und 72 befinden sich Zylinderabschnitte 74 der Führungshülse 68.1. Bezogen auf diese Zylinderabschnitte 74 sind die Umfangsrippen 70, 72 in radialer Richtung erhaben. Die Kontaktbereiche 52 und 54 der Umfangsrippen 70, 72 sind hier zylindrische Umfangsflächen 76, 78. Bei einer nicht eigens gezeigten Abwandlung können die Kontaktbereiche 52, 54 auch gewölbt sein, so dass der Kontakt zu den benachbarten Bauteilen linienhaft erfolgt.

Wenn eine Kraft auf die Kontaktbereiche 52, 54 der Umfangsrippen 70, 72 einwirkt, können diese ihre Lage verlassen und am Ort der Kraft in die entgegengesetzte Richtung ausweichen, wodurch wieder ein möglicher Materialabrieb reduziert ist.

In Figur 11 ist als sechstes Ausführungsbeispiel eines Radiallager-Ringelements 36 eine abgewandelte Führungshülse 68.2 gezeigt, welche sowohl für Axialbewegungen als auch für Schwenk- oder Drehbewegungen konzipiert ist. Bereits erläuterte Komponenten tragen wieder dieselben Bezugszeichen.

Die Außenmantelfläche 40 und die Innenmantelfläche 44 der Führungshülse 68.2 bilden äußere und innere Materialerhebungen 42 und 46 in Form von diskreten Noppen 80, 82 aus, die in axialer Richtung und in Umfangsrichtung versetzt angeordnet sind. Die äußeren Noppen 80 hinter der Zeichenebene sind in Figur 11 wieder gestrichelt gezeigt.

In den Materialbereichen 84 zwischen den Noppen 80, 82 entspricht die Führungshülse 68.2 einem Hohlzylinder, von dem die Noppen 80, 82 in radialer Richtung abragen.

Wenn auf die Kontaktflächen 56, 58 der Noppen 80, 82 eine Kraft ausgeübt wird, können die diese radial in die entgegengesetzte Richtung zurückweichen.

## Patentansprüche

1. Radiallager-Ringelement zum beweglichen Lagern eines ersten Bauteils (16) und eines zweiten Bauteils (12), welche koaxial zueinander angeordnet sind, wobei
a) das Radiallager-Ringelement eine Außenmantelfläche (40) und eine Innenmantelfläche (44) hat;
b) an der Außenmantelfläche (40) äußere Materialerhebungen (42) und an der Innenmantelfläche (44) innere Materialerhebungen (46) vorhanden sind,
**dadurch gekennzeichnet, dass**
c) die äußeren Materialerhebungen (42) und/oder die inneren Materialerhebungen (46) in radialer Richtung beweglich sind.

2. Radiallager-Ringelelement nach Anspruch 1, **dadurch gekennzeichnet, dass**
a) die Außenmantelfläche (40) des Radiallager-Ringelements (36) äußere Materialerhebungen (42) und die Innenmantelfläche (44) des Radiallager-Ringelements (36) innere Materialerhebungen (46) bilden;
b) die äußeren Materialerhebungen (42) und die inneren Materialerhebungen (46) derart zueinander versetzt angeordnet sind und das Radiallager-Ringelement (36) aus einem Material ist, dass die äußeren Materialerhebungen (42) und die inneren Materialerhebungen (46) in radialer Richtung beweglich sind.

3. Radiallager-Ringelelement nach Anspruch 1 oder 2, **dadurch gekennzeichnet, dass** die äußeren Materialerhebungen (42) und/oder die inneren Materialerhebungen (46) federnd radial beweglich sind.

4. Radiallager-Ringelelement nach einem der Ansprüche 1 bis 3, **dadurch gekennzeichnet, dass** äußere Materialerhebungen (42) und/oder innere Materialerhebungen (46) Kontaktbereiche (52, 54) haben, die durch Kontaktflächen (56, 58) vorgegeben sind, die der lichten Kontur eine zum Radiallager-Ringelement (36) koaxialen Kreiszylinders folgen, oder die linienhaft sind.

5. Radiallager-Ringelelement nach einem der Ansprüche 1 bis 4, **dadurch gekennzeichnet, dass** äußere Materialerhebungen (42) und/oder innere Materialerhebungen (46) Umfangsrippen (70, 72) bilden.

6. Radiallager-Ringelelement nach einem der Ansprüche 1 bis 5, **dadurch gekennzeichnet, dass** äußere Materialerhebungen (42) und/oder innere Materialerhebungen (46) diskrete Noppen (80, 82) bilden.

7. Radiallager-Ringelelement nach einem der Ansprüche 1 bis 6, **dadurch gekennzeichnet, dass** in einer oder in allen Materialerhebungen (42, 46) ein Depot (62) für ein Schmiermittel eingearbeitet ist.

8. Radiallager-Ringelelement nach Anspruch 7, **dadurch gekennzeichnet, dass** das Depot (62) als axiale Nut (64) oder als Sackloch (66) ausgebildet ist.

9. Radiallager-Ringelelement nach einem der Ansprüche 1 bis 8, **dadurch gekennzeichnet, dass** das Radiallager-Ringelement (36) als Führungsring (38.1; 38.2; 38.3; 38.4) oder als Führungshülse (68.1; 68.2) ausgebildet ist.

10. Sanitärarmatur mit
a) einem Auslauf (16), welcher relativ zu einem Lagerbauteil (12) der Sanitärarmatur bewegbar ist und ein Verbindungsteil (20) umfasst, welches koaxial mit einem Lagerbereich (22) des Lagerbauteils (12) zusammenarbeitet;
b) wenigstens einem Radiallager-Ringelement (36) mit einer Außenmantelfläche (40) und einer Innenmantelfläche (44), welches zwischen dem Verbindungsteil (20) des Auslaufes (16) und dem Lagerbereich (22) des Lagerbauteils (12) angeordnet ist,
**dadurch gekennzeichnet, dass**
c) das Radiallager-Ringelement (36) ein Radiallager-Ringelement nach einem der Ansprüche 1 bis 9 ist.
